# EUROPÄISCHE PATENTANMELDUNG

(11) **EP 2 367 084 A1**
(43) Veröffentlichungstag der Anmeldung: **21.09.2011**
(21) Anmeldenummer: 10002900.8
(22) Anmeldetag: 18.03.2010
(51) Int. Cl.: G05B 19/05, G05B 19/042, G06F 9/445

(54) **Verfahren für die Konfigurierung einer Steuerungseinrichtung einer industriellen Automatisierungsanordnung und Komponente für eine industrielle Automatisierungsanordnung**

(71) Anmelder: SIEMENS AKTIENGESELLSCHAFT, 80333 München (DE)
(72) Erfinder: Lange, Ronald, 90766 Fürth (DE); Oppmann, Herbert, 90425 Nürnberg (DE)

(57) **Zusammenfassung**

Die Erfindung betrifft ein Verfahren für die Konfigurierung einer Steuerungseinrichtung (CPU) einer industriellen Automatisierungsanordnung (SPS) zur Verwendung einer Komponente (BG1, ..., BGn), und eine Komponente (BG1, ..., BGn) zum Betrieb mit einer Steuerungseinrichtung (CPU) in einer industriellen Automatisierungsanordnung (SPS). Dabei sendet die Komponente (BG1, ..., BGn) eine diese bezeichnende Identifizierungsinformation einer Konfigurierungs-Einrichtung (PG) zu, wobei die Konfigurierungs-Einrichtung (PG) anhand der Identifizierungsinformation aus einer Anzahl gespeicherter oder abrufbarer Konfigurierungs-Datensätze einen der diesen Identifizierungsinformationen zugeordneten der Konfigurierungs-Datensätze auswählt. Dabei wird zumindest in den Fällen, in denen kein zugeordneter Konfigurierungs-Datensatz auffindbar ist, eine Ersatz-Identifizierungsinformation von der Komponente (BG1, ..., BGn) zu der Konfigurierungs-Einrichtung (PG) übertragen und dort zur Ermittlung eines der Ersatz-Identifizierungsinformation zugeordneten und ersatzweise zu verwendenden Konfigurierungs-Datensatzes verwendet. Durch die Speicherung von Informationen über andere Komponenten (BG1, ..., BGn), deren zugeordnete Konfigurierungs-Datensätze ersatzweise verwendet werden können, zum Abruf in der Komponente (BG1, ..., BGn) ist es möglich, auch solche Komponenten (BG1, ..., BGn) zu verwenden bzw. zu konfigurieren, für die kein eigener zugeordneter Konfigurierungs-Datensatz verfügbar ist.

## Beschreibung

Die Erfindung betrifft ein Verfahren für die Konfigurierung einer Steuerungseinrichtung einer industriellen Automatisierungsanordnung gemäß dem Oberbegriff des Patentanspruchs 1, und eine Komponente zum Betrieb mit einer Steuerungseinrichtung in einer industriellen Automatisierungsanordnung gemäß dem Oberbegriff des Patentanspruchs 6.

Die Hardware von Computern und anderen datentechnischen Anlagen, insbesondere von industriellen Automatisierungsanordnungen, besteht fast immer aus einem Verbund verschiedener Hardware-Komponenten (kurz: Komponenten), die über Datenleitungen, Bussysteme oder Schnittstellen miteinander verbunden sind. So kann beispielsweise als eine Steuerungseinrichtung ein Computer (Personal Computer) eingesetzt werden, an den als Komponente ein Peripheriegerät, beispielsweise ein Drucker, angeschlossen ist, oder aber wobei der Computer durch eine Steckkarte o.ä. mit einer Zusatz-Hardware, beispielsweise einer Schnittstellenkarte, erweitert ist. In den industriellen Automatisierungsanordnungen werden häufig sog. Controller, auch CPU oder PLC genannt, als Steuerungseinrichtung eingesetzt, wobei daran über ein Rückwand-Bussystem oder über ein Feldbussystem oder andere Datenleitungen oder Schnittstellen Peripheriegeräte als Komponenten angeschlossen sind, beispielsweise sog. I/O-Module (Input-Output-Module) oder andere Baugruppen.

Regelmäßig ist die Steuerungseinrichtung mit einer Software versehen, die den Betrieb der angeschlossenen Komponente bzw. Komponenten steuert oder überwacht. Dabei muss eine Komponente in die Steuerungseinrichtung bzw. die dort ablaufende Software "datentechnisch eingebunden" werden, d.h., dass beispielsweise ein passender "Treiber" zum Betrieb der Komponente geladen werden muss, die Adressierung der Komponente muss festgelegt werden, die Komponente oder Baugruppe muss "parametriert" bzw. mit einer Software geladen werden etc. Für diese und ähnliche Vorgänge soll im Weiteren der Sammelbegriff "Konfigurierung" verwendet werden.

Bei der Projektierung und Programmierung industrieller Automatisierungsanordnungen und speziell der dabei verwendeten Steuerungsgeräte werden als Software-Werkzeuge zur Konfigurierung (im Folgenden "Konfigurierungs-Einrichtung" genannt) sog. "Engineering-Systeme" mit Editoren, Compilern, Debuggern etc. verwendet. In anderen Fällen kann auch eine Software, beispielsweise ein Betriebsprogramm oder Betriebssystem, einer Steuerungseinrichtung selbst eine Konfigurierung vornehmen; in diesem Fall sind Steuerungs-Einrichtung und Konfigurierungs-Einrichtung identisch oder zumindest auf derselben Hardware angeordnet.

Es werden verschiedene Ansätze für die Konfigurierung der "Peripherie" verfolgt. So kann in einer ersten Vorgehensweise eine Konfigurierungs-Einrichtung, also beispielsweise ein Engineering-System, zum Zwecke der Konfigurierung "von außen" Informationen über die verwendeten Komponenten beziehen, beispielsweise durch Benutzereingaben während der Projektierung. Zum Zeitpunkt der Projektierung ist es daher nicht notwendig, dass die Komponente tatsächlich bereits vorliegt bzw. mit der zu programmierenden Steuerungseinrichtung und somit zumindest mittelbar mit der Konfigurierungs-Einrichtung verbunden ist. Nach der Spezifikation aller Parameter etc. in der Konfigurierungs-Einrichtung, also dem Engineering-System, wird die derart ermittelte Konfiguration in die Steuerungseinrichtung (SPS, CPU) angewendet und ggf. auch - zumindest teilweise - auf die tatsächlichen Baugruppen (Komponenten) geladen. Es liegt dabei in der Verantwortung eines Anwenders, dass der tatsächliche physikalische Aufbau, der auch als "Konfiguration" bezeichnet wird, den während der Projektierung angenommenen Gegebenheiten entspricht. In einer alternativen Vorgehensweise wird zunächst der tatsächliche "physikalische" Aufbau zusammengestellt, wonach in einem automatisierten Vorgang ("Upload") ein datentechnisches Abbild dieses physikalischen Aufbaus (der "Konfiguration") zu dem Software-Werkzeug übermittelt wird.

In beiden Fällen wird anhand der Informationen über die tatsächlichen Gegebenheiten, die in dem Software-Werkzeug schließlich vorliegen, aus einer Datenbank alle für die Konfigurierung benötigten Komponenten-spezifischen Informationen, also die Konfigurierungs-Datensätze der verwendeten Komponenten, abgerufen und für die Programmierung bzw. Konfigurierung der Steuerungseinrichtung verwendet. Diese Konfigurierungs-Datensätze können beispielsweise Software-Treiber umfassen und/oder andere für die jeweils verwendete Komponente spezifische Informationen.

Die für die Konfigurierung benötigten Konfigurierungs-Datensätze können in dem Software-Werkzeug bzw. dem dazu verwendeten Arbeitsplatz ("Engineering-System", "Programmiergerät") gespeichert sein. Alternativ kann auch auf externe Datenbanken zurückgegriffen werden; so kann beispielsweise nach einer Identifizierung der einzubindenden Komponente automatisch auf der Web-Seite des entsprechenden Herstellers oder in einer zentralen "Parameter- und Treiberbibliothek" nach einem benötigten Konfigurierungs-Datensatz gesucht werden.

Probleme treten oft auf, wenn anhand der vorliegenden und ggf. von der entsprechenden Komponente abgerufenen Identifizierungsinformationen (z.B. Hersteller, Typ, Firmware-Version etc.) kein passender Konfigurierungs-Datensatz, also Parameter, Treiber, Software, Firmware o.ä., aufgefunden werden kann. In einem solchen Fall kann das Software-Werkzeug die einzubindende Komponente beispielsweise mit einem "generischen" Konfigurierungs-Datensatz (z.B. generischer Treiber) der entsprechenden Geräteklasse verwenden. Nachteilig ist dabei jedoch, dass dabei oft nur eine Nutzung von "Basisfunktionen" der Komponente möglich ist. Komponenten aus unbekannten Geräteklassen können überhaupt nicht konfiguriert werden. Neben den erwähnten Geräte-"Klassen" können auch Geräte-"Profile" und andere Klassifizierungen verwendet werden, für die jedoch dieselben Einschränkungen gelten, insbesondere Probleme hinsichtlich der Nutzung herstellerspezifischer oder Komponenten-spezifischer Sonder- und Zusatzfunktionalitäten.

Schließlich ist es bekannt, Komponenten selbst mit dem benötigten Konfigurierungs-Datensatz, insbesondere Treiber-Software, auszustatten, wobei diese Konfigurierungs-Datensätze von den Komponenten abgerufen werden können und somit dem Software-Werkzeug oder der Steuerungseinrichtung zur Verfügung stehen. Dies verlangt jedoch nach Komponenten, die über ausreichende Speicherkapazität und über ausreichende Kommunikations-Fähigkeiten verfügen. Weiter ist dabei nachteilig, dass für unterschiedliche "Host-Betriebsysteme" der Steuerungseinrichtungen auch unterschiedliche Datensätze bereit gehalten werden müssen. Weiter ist von Nachteil, dass nach dem Herstellungszeitpunkt einer Komponente ein "Update" der Konfigurierungs-Datensätze nicht oder nur schwer möglich ist.

Es ist also eine Aufgabe der vorliegenden Erfindung, die Konfigurierung von Komponenten in Steuerungs-Einrichtungen (PC's, PLC's, CPU's, etc.) insbesondere in den Fällen zu ermöglichen oder zu vereinfachen, in denen ein zugeordneter Konfigurierungs-Datensatz nicht vorliegt.

Es ist dabei eine zentrale Idee der Lösung der Aufgabe, dass in der zu konfigurierenden Komponente Informationen über solche anderen Geräte und Komponenten zum Abruf bereit gehalten werden, zu denen die vorliegende Komponente "kompatibel" ist. Die Kompatibilität bedeutet dabei, dass die Komponente beispielsweise als Ersatzteil für eine andere, funktionsähnliche Komponente eingesetzt werden kann. D.h., dass sich die "neue" Komponente nach ihrer informationstechnischen Einbindung (Konfigurierung) mittels des Konfigurierungs-Datensatzes des anderen, beispielsweise zu ersetzenden, Gerätes oder Komponente genau wie diese andere Komponente verhält.

Die Aufgabe wird insbesondere durch ein Verfahren gemäß dem Patentanspruch 1 gelöst, wobei für die Konfigurierung einer Steuerungseinrichtung einer industriellen Automatisierungsanordnung zur Verwendung einer peripheren Komponente zunächst die Komponente eine diese bezeichnende Identifizierungsinformation einer Konfigurierungs-Einrichtung zusendet bzw. von dieser abgerufen wird. Die Konfigurierungs-Einrichtung wählt anhand der Identifizierungsinformation aus einer Anzahl gespeicherter oder abrufbarer Konfigurierungs-Datensätze einen dieser Identifizierungsinformation zugeordneten der Datensätze aus und verwendet diesen für die Konfigurierung einer Steuerungseinrichtung für den Betrieb der Komponente. Dabei wird zumindest in den Fällen, in denen in der Steuerungseinrichtung kein der übermittelten Identifizierungsinformation zugeordneter Konfigurierungs-Datensatz auffindbar oder abrufbar ist, als eine weitere Identifizierungsinformation zumindest eine Ersatz-Identifizierungsinformation von der Komponente zu der Konfigurierungs-Einrichtung übertragen bzw. von dieser von der Komponente abgerufen. Diese Ersatz-Identifizierungsinformation bezeichnet dabei mindestens eine andere Komponente, wobei die Komponente zum Betrieb mittels des dieser anderen Komponente zugeordneten Konfigurierungs-Datensatzes geeignet ist. Somit verwendet die Konfigurierungs-Einrichtung diesen der Ersatz-Identifizierungsinformation zugeordneten Konfigurierungs-Datensatz zur Konfigurierung der Steuerungseinrichtung und damit der Komponente. Bei diesem Verfahren hat sich als vorteilhaft herausgestellt, dass die Ersatz-Identifizierungsinformation eine andere, ggf. ältere, Komponente bezeichnet, für die im Gegensatz zur tatsächlich vorliegenden Komponente ein Konfigurierungs-Datensatz verfügbar ist, so dass dieser Konfigurierungs-Datensatz ersatzweise für den nicht verfügbaren oder auffindbaren "Original"-Konfigurierungs-Datensatz eingesetzt werden kann. Somit kann beispielsweise eine "neue" Komponente, zum Ersatz einer älteren Komponente auch dann verwendet werden, wenn nur ein Treiber, Parameter-Satz o.ä. der älteren Komponente verfügbar ist. Voraussetzung dafür ist jedoch, dass ein Betrieb der "neuen" Komponente mit dem vorhandenen Treiber, Datensatz, Parameter-Satz etc. überhaupt möglich ist.

Die Aufgabe wird außerdem durch eine Komponente zum Betrieb mit einer Steuerungseinrichtung in einer industriellen Automatisierungsanordnung nach Patentanspruch 6 gelöst, wobei die Komponente eine durch eine Konfigurierungs-Einrichtung abrufbare Identifizierungsinformation aufweist. Dabei hält die Komponente zumindest eine Ersatz-Identifizierungsinformation zur Übermittlung an die Konfigurierungs-Einrichtung bereit, wobei diese Ersatz-Identifizierungsinformation eine andere Komponente bezeichnet, deren zugeordneter Konfigurierungs-Datensatz für den Betrieb der Komponente verwendbar ist. Eine solche Komponente kann vorteilhaft auch dann eingesetzt werden, wenn ein dieser zugeordneter Konfigurierungs-Datensatz nicht verfügbar ist.

Vorteilhafte Ausgestaltungen der erfindungsgemäßen Lösung sind in den abhängigen Patentansprüchen angegeben. Die dabei hinsichtlich des erfindungsgemäßen Verfahrens vorgeschlagenen Merkmale und deren Vorteile gelten sinngemäß auch für die erfindungsgemäße Komponente, und umgekehrt.

Um die Wahrscheinlichkeit des Vorhandenseins passender "Ersatz"-Konfigurierungs-Datensätze zu erhöhen, werden von der Komponente eine Mehrzahl an Ersatz-Identifizierungsinformationen zu der Konfigurierungs-Einrichtung übermittelt. Dabei wählt die Konfigurierungs-Einrichtung aus den Ersatz-Identifizierungsinformationen eine oder diejenige aus, für die ein zugeordneter Konfigurierungs-Datensatz vorliegt oder abrufbar/auffindbar ist, wonach die Steuerungseinrichtung den Konfigurierungs-Datensatz der ausgewählten der Ersatz-Identifizierungsinformationen zum Betrieb der Komponente verwendet. Beim Vorliegen mehrerer geeigneter Konfigurierungs-Datensätze kann dabei vorteilhaft der am besten Geeignete ausgewählt werden, beispielsweise der zeitlich aktuellste, der mit dem höchsten Funktionsumfang oder derjenige, dessen Versionsnummer am nächsten an einer Versionsnummer der zu verwendenden Komponente liegt.

Vorteilhaft ist die Komponente zur wahlweisen Nachbildung von Eigenschaften der anderen Komponenten eingerichtet, wobei die Steuerungseinrichtung oder die Konfigurierungs-Einrichtung eine Information über die zu verwendende Ersatz-Identifizierungsinformation zu der Komponente übermittelt, und wonach die Komponente die mit der übermittelten Ersatz-Identifizierungsinformation bezeichnete der anderen Komponenten bzw. deren Funktionalität nachbildet. Somit kann vorteilhaft eine solche Komponente verschiedene Betriebsarten/Betriebs-Modi aufweisen, in denen jeweils eine andere Komponente "simuliert" wird. Dies ist besonders dann vorteilhaft, wenn die verschiedenen simulierten Komponenten unterschiedliche Befehlssätze o.ä. aufweisen.

Ein Ersatz-Konfigurierungs-Datensatz kann umso genauer bzw. zielgerichteter ausgewählt werden, desto detaillierter die Identifizierungsinformation der zu konfigurierenden Komponente vorliegt. Vorteilhaft enthält eine Identifizierungsinformation jeweils Angaben über einer Hardware-Variante und/oder eine Software-Variante (auch: Firmware-Variante) der Komponente. Vorteilhaft wird ein sog. "Versions-schema" verwendet.

In einer Variante ist die Komponente, deren Identifizierungsinformationen zur Auswahl oder Beschaffung des Konfigurierungs-Datensatzes verwendet wird, identisch mit der zu konfigurierenden Steuerungseinrichtung. Dies bedeutet, dass in einem solchen Fall eine Komponente sich selbst konfiguriert, beispielsweise mit Parametern oder Software, und dazu aus der Menge "kompatibler" Parameter oder Software auswählen kann.

In einer weiteren Variante kann die Komponente auch angeschlossene Peripherie-Geräte, beispielsweise Baugruppen, Module oder sonstige angeschlossene Geräte, aufweisen, für die ebenfalls Parameter, Treiber oder andere Konfigurierungs-Informationen in der Komponente benötigt werden. Auch dazu können erfindungsgemäß in der Komponente Informationen über "kompatible" Peripherie-Geräte vorliegen, deren zugeordnete Parameter, Treiber oder andere Konfigurierungs-Informationen zur Konfigurierung der Komponente herangezogen werden können.

Ein Ausführungsbeispiel für das erfindungsgemäße Verfahren wird nachfolgend anhand der Zeichnung erläutert. Es dient gleichzeitig der Erläuterung einer erfindungsgemäßen Komponente.

Dabei zeigt die einzige Figur in schematischer Darstellung eine industrielle Automatisierungseinrichtung mit einem Programmiergerät und einem Datenspeicher.

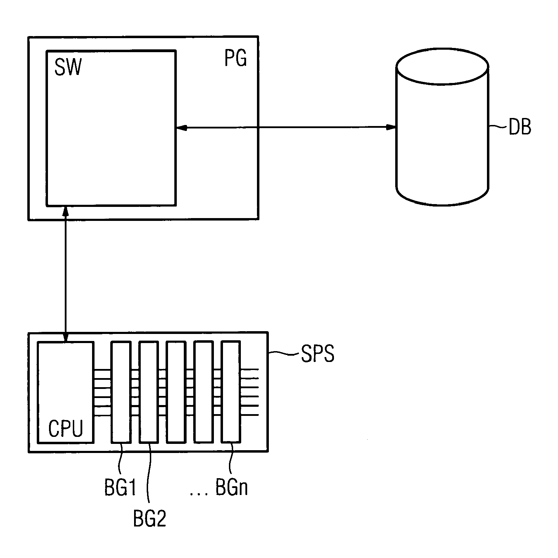

In der Figur 1 ist schematisch als industrielle Automatisierungseinrichtung eine speicherprogrammierbare Steuerung SPS gezeigt, die im dargestellten Beispiel als Baugruppenträger ausgeführt ist, in den eine Steuerungseinrichtung CPU und als Komponenten die Baugruppen BG1, ..., BGn eingesteckt sind. Über eine nicht dargestellte und dem Stand der Technik entsprechende Netzwerk-Infrastruktur ist die speicherprogrammierbare Steuerung SPS mit einem Programmiergerät PG ("Engineering-System") verbunden, wobei die dort bereitgestellten Funktionen zur Projektierung und Programm-Erstellung (Editierung, Kompilierung etc.) durch eine Software SW bereit gestellt werden. Das Programmiergerät PG ist mit einem Datenspeicher DB verbunden, der unter anderem für die Speicherung von Konfigurierungs-Datensätzen verwendet wird. Obwohl der Datenspeicher DB in der Figur als externes Gerät dargestellt ist, können die entsprechenden Daten auch beispielsweise auf einer Festplatte des Programmiergerätes PG, auf einer CD-ROM oder einem ähnlichen Datenträger, oder auch in einer Datenbank eines Intranets oder des Internets gespeichert sein.

Für die Erstellung und Bearbeitung eines Projekts für die industrielle Automatisierungsanordnung benötigt das Programmiergerät PG und damit die Software SW zahlreiche Informationen über die eingesetzten Komponenten, ohne die eine Programmerstellung und eine spätere Nutzung der Baugruppen BG1, ..., BGn nicht möglicht ist. Diese Informationen werden, wie gesagt, zum Einen benötigt, um überhaupt einen Programmcode erstellen zu können, der zum Ablauf auf die Steuerungseinrichtung CPU übertragen wird. Zum Anderen werden diese Informationen oder zumindest daraus abgeleitete Informationen auch für die Konfigurierung der Steuerungseinrichtung CPU und der Komponenten benötigt. Auch diese Informationen werden zunächst im Programmiergerät PG bzw. der Software SW konfiguriert und fließen dann in diejenigen Daten ein, die als fertiges Programm zu der Steuerungseinrichtung CPU übertragen werden. Diese Informationen können in einen Geräte-Anteil und in einen sog. "Host"-Anteil untergliedert werden. Während der Geräte-Anteil von der Steuerungseinrichtung CPU zu einem festgelegten Zeitpunkt, meist dem Start des Systems, auf eine Komponente, also eine Baugruppe BG1, ..., BGn, übertragen wird, verbleibt der "Host"-Anteil zum Betrieb in der Steuerungseinrichtung CPU, beispielsweise um eine Adressierung der Komponenten zu ermöglichen o.ä.

In dem Datenspeicher DB sind für die Komponenten BG1, ... BGn Konfigurierungs-Datensätze enthalten, die die zuvor beschriebenen Informationen umfassen, die seitens des Programmiergerätes PG und der Software SW immer dann benötigt werden, wenn die entsprechenden Komponenten, also die Baugruppen BG1, ..., BGn, in einem Projekt verwendet werden. Dazu gehören also sowohl die Informationen, die nur im Programmiergerät PG verwendet werden, als auch solche Informationen, die im Rahmen eines fertig erstellten Programms oder Projektes als Konfigurierungs-Daten, also sowohl als Geräte-Anteil als auch als "Host"-Anteil, zu der Steuerungseinrichtung CPU übertragen werden. Alle diese Informationen sind Baugruppen-spezifisch in den entsprechenden Konfigurierungs-Datensätzen des Datenspeichers DB verfügbar.

Für die Projektierung eines neuen Projektes wird die Konfiguration der speicherprogrammierbaren Steuerung SPS durch ein automatisiertes Verfahren, den sog. "Upload", automatisch festgestellt und zu dem Programmiergerät PG übertragen. Das bedeutet, dass die Identifizierungs-Informationen (meist Hersteller- und Typbezeichnungen) der Steuerungseinrichtung CPU und der Komponenten, also der Baugruppen BG1, ..., BGn, sowie deren Anordnung zueinander (z.B.: die verwendeten Steckplätze im Baugruppenträger) festgestellt (abgerufen) und zu dem Programmiergerät PG übertragen werden. Anhand der übertragenen Identifizierungsinformationen ruft das Programmiergerät PG dann die entsprechenden Konfigurierungs-Datensätze mit den benötigten Informationen aus dem Datenspeicher DB ab. Im Folgenden sei angenommen, dass es sich bei der Komponente, die durch die Baugruppe BG1 gebildet wird, um ein Gerät der neuesten Bauart handelt, welches ersatzweise für ein funktionsähnliches Gerät älteren Typs in den Baugruppenträger eingesteckt wurde. Für diesen Typ kann anhand der übermittelten Identifizierungsinformation kein Konfigurierungs-Datensatz aufgefunden werden. Aus diesem Grund übermittelt das Programmiergerät PG an die Baugruppe BG1 eine neue Abfragnachricht, mit der eine sog. "Kompatibilitätsliste" mit sog. "Ersatz-Identifizierungsinformationen" abgefragt werden soll. Diese Abfrage wird im vorliegenden Ausführungsbeispiel zunächst an die Steuerungseinrichtung CPU übermittelt, die wiederum eine entsprechende Abfrage direkt bei der Baugruppe BG1 vornimmt und die Rückantwort der Baugruppe BG1 an das Programmiergerät PG weiterleitet; in einer alternativen Ausführungsform kann das Programmiergerät PG jedoch auch direkt mit Baugruppe BG1 kommunizieren.

Die übermittelte Kompatibilitätsliste umfasst nun eine oder mehrere weitere Identifizierungsinformationen, die auch als Ersatz-Identifizierungsinformationen bezeichnet werden. Diese Ersatz-Identifizierungsinformationen bezeichnen eine oder mehrere andere Komponenten, zu denen die "neue" Baugruppe BG1 kompatibel ist bzw. sein kann, d.h., dass die Baugruppe BG1 die Funktionalität dieser anderen Komponenten teilweise oder vollständig nachbilden kann und in ihrer Ansteuerung (Adressierung, Befehlssatz etc.) in gleicher Weise, wie diese anderen Komponenten, betrieben werden kann.

Anhand der Identifizierungsinformationen (Ersatz-Identifizierungsinformationen) aus dieser "Kompatibilitätsliste" versucht das Programmiergerät PG nun, aus dem Datenspeicher DB oder einer anderen Datenquelle zumindest einen Konfigurierungs-Datensatz abzurufen, wobei in den Fällen, in denen mehrere "passende" Konfigurierungs-Datensätze verfügbar sind, nach einem Optimierungskriterium einer dieser Konfigurierungs-Datensätze für den weiteren Betrieb ausgewählt wird. Dieser ausgewählte Konfigurierungs-Datensatz wird zum Einen direkt bei der weiteren Projektierung verwendet, und zum Anderen, zumindest teilweise, zur Übertragung an die Steuerungseinrichtung CPU bzw. zur Erzeugung solcher Daten vorgesehen. In einer alternativen Ausführungsform können auch anhand des Konfigurierungs-Datensatzes nach Konfigurierung des Programmiergerätes PG direkt durch das Programmiergerät PG Einstellungen und Parametrierungen der Komponente, also der Baugruppe BG1, vorgenommen werden.

Sofern die Baugruppe BG1 über keinen nichtflüchtigen Speicher bezüglich ihrer Konfigurierungsdaten oder Parameter verfügt, wird diese bei jedem Systemstart oder bei Bedarf durch die Steuerungseinrichtung CPU mit Konfigurierungsdaten "geladen". Dazu gehört in einer vorteilhaften Ausgestaltung auch die Information darüber, welche Ersatz-Identifizierzierungsinformation verwendet wird, wodurch eine entsprechende "Verhaltensweise" der Baugruppe BG1 festgelegt wird. Dies bedeutet, dass die Baugruppe BG1 die verschiedenen, in der "Kompatibilitätsliste" aufgeführten anderen Komponenten wahlweise "simulieren" kann, so dass mit dem "Laden" der Baugruppe BG1 auch festgelegt wird, welche der genannten anderen Komponenten im weiteren Betrieb "simuliert" werden soll.

Die Identifizierungsinformationen und damit insbesondere auch die Ersatz-Identifizierzierungsinformationen, die zum Auffinden der Konfigurierungs-Datensätze genauso wie die "nativen" Identifizierungsinformationen verwendet werden, können in einem "Versionierungs-Schema" angeordnet sein, was bedeutet, dass die Versionsbezeichnung der Hardware und/oder der Software (Firmware) der Komponente z.B. hierarchisch, funktionell oder chronologisch strukturiert ist. Dies bedeutet, dass für die Ersatz-Identifizierzierungsinformationen beispielsweise auch Platzhalter ("Wildcards", "Joker") erlaubt sein können, wodurch ganze Geräte-Familien o.ä. bezeichnet werden können. Neben der Verwendung von Platzhaltern bietet das außerdem die Möglichkeit, beim Vorhandensein mehrerer Konfigurierungs-Datensätze eine optimale Auswahl zu treffen, beispielsweise indem derjenige Identifizierungs-Datensatz ausgewählt wird, welcher eine Identifizierungsinformation der "höchsten" oder "neusten" Version einer Komponente entspricht.

Im vorliegenden Ausführungsbeispiel ist eine Architektur beschrieben, bei welcher zumindest zum Laden einer Komponente (Baugruppe) eine Steuerungseinrichtung CPU verwendet wird, welche wiederum durch ein Programmiergerät PG konfiguriert und programmiert wird. In einem alternativen Ausführungsbeispiel kann jedoch beispielsweise auch die Steuerungseinrichtung CPU mit dem Programmiergerät PG, also der Konfigurierungs-Einrichtung, identisch sein. Dies ist beispielsweise dann der Fall, wenn die Komponente von einer als Software gebildeten speicherprogrammierbaren Steuerung SPS, einer sog. Soft-SPS, angesteuert wird, weil auf der gleichen Hardware, die die Soft-SPS trägt, auch die Programmiereinrichtung oder Konfigurierungs-Einrichtung angeordnet sein kann. Dennoch lässt sich auch in einem solchen Fall die Konfigurierungs-Einrichtung logisch getrennt von der zu konfigurierenden Steuerungseinrichtung bzw. der zu konfigurierenden Komponente betrachten.

Die Idee der "Kompatibilitäts-Liste" mit Ersatz-Identifizierungsinformationen lässt sich in einem alternativen Ausführungsbeispiel auch auf die Steuerungseinrichtung CPU selbst anwenden, die dann die zu konfigurierende Komponente darstellt. Auch die Steuerungseinrichtung CPU lässt sich identifizieren, auch sie könnte kompatibel zu einer Vorgänger-Steuerungseinrichtung sein und eine entsprechende "Kompatibilitäts-Liste" liefern. Der Unterschied hierbei liegt nur im Laufzeitverhalten: Die Steuerungseinrichtung CPU erhält vom Engineering System, also von der Konfigurierungs-Einrichtung PG, nicht die ursprünglich projektierte "Identifikation", sondern sie erhält ersatzweise andere Konfigurations-Informationen (oft auch SDBs = Systemdatenbausteine genannt) und interpretiert sie und stellt sich entsprechend ein. Eine neuere CPU mit einem größeren Funktionsumfang würde somit bestimmte Funktionen ("Features") nicht nutzen, für die keine Konfiguration geladen wird.

In einem anderen Beispiel kann statt eines Programmiergerätes oder "Engineering-Systems" auch ein Bediengerät ("HMI-Panel") oder ein Diagnosegerät mit einem Konfigurierungs-Datensatz konfiguriert werden, um somit anhand einer "kompatiblen Gerätetyp-Information" die für einen Zugriff zur Laufzeit der Komponente notwendigen Informationen zu erlangen.

## Patentansprüche

1. Verfahren für die Konfigurierung einer Steuerungseinrichtung (CPU) einer industriellen Automatisierungsanordnung (SPS) zur Verwendung einer Komponente (BG1, ..., BGn),
wobei die Komponente (BG1, ..., BGn) eine diese bezeichnende Identifizierungsinformation einer Konfigurierungs-Einrichtung (PG) zusendet, und
wobei die Konfigurierungs-Einrichtung (PG) anhand der Identifizierungsinformation aus einer Anzahl gespeicherter oder abrufbarer Konfigurierungs-Datensätze einen der dieser Identifizierungsinformation zugeordneten der Konfigurierungs-Datensätze auswählt und die Steuerungseinrichtung (CPU) mit diesem zum Betrieb der Komponente (BG1, ..., BGn) konfiguriert,
**dadurch gekennzeichnet,**
**dass** zumindest in den Fällen, in denen zu der Identifizierungsinformation kein zugeordneter Konfigurierungs-Datensatz auffindbar oder abrufbar ist, als weitere Identifizierungsinformation eine Ersatz-Identifizierungsinformation von der Komponente (BG1, ..., BGn) zu der Konfigurierungs-Einrichtung (PG) übertragen wird, wobei diese Ersatz-Identifizierungsinformation eine andere Komponente (BG1, ..., BGn) bezeichnet, und wobei die Komponente (BG1, ..., BGn) zum Betrieb mittels eines der anderen Komponente (BG1, ..., BGn) zugeordneten und gespeicherten oder abrufbaren Konfigurierungs-Datensatzes geeignet ist, und
**dass** die Steuerungseinrichtung (CPU) zur Verwendung des der Ersatz-Identifizierungsinformation zugeordneten Konfigurierungs-Datensatzes zum Betrieb der Komponente (BG1, ..., BGn) konfiguriert wird.

2. Verfahren nach Patentanspruch 1,
**dadurch gekennzeichnet,**
**dass** von der Komponente (BG1, ..., BGn) eine Mehrzahl Ersatz-Identifizierungsinformationen zu der Konfigurierungs-Einrichtung (PG) übermittelt werden,
wobei die Konfigurierungs-Einrichtung (PG) aus den Ersatz-Identifizierungsinformationen eine oder diejenige auswählt, für die ein zugeordneter Konfigurierungs-Datensatz vorliegt oder abrufbar ist, und
**dass** die Steuerungseinrichtung (CPU) den Konfigurierungs-Datensatz der ausgewählten der Ersatz-Identifizierungsinformationen zum Betrieb der Komponente (BG1, ..., BGn) verwendet.

3. Verfahren nach Patentanspruch 1 oder 2,
**dadurch gekennzeichnet,**
**dass** die Komponente (BG1, ..., BGn) zur wahlweisen Nachbildung von Eigenschaften der anderen Komponenten (BG1, ..., BGn) eingerichtet ist,
**dass** die Konfigurierungs-Einrichtung (PG) oder die Steuerungseinrichtung (CPU) eine Information über die verwendete Ersatz-Identifizierungsinformation zu der Komponente (BG1, ..., BGn) übermittelt, und
**dass** die Komponente (BG1, ..., BGn) die mit der übermittelten Ersatz-Identifizierungsinformation Bezeichnete der anderen Komponenten (BG1, ..., BGn) nachbildet.

4. Verfahren nach Patentanspruch 1 bis 3,
**dadurch gekennzeichnet,**
**dass** durch die Identifizierungsinformation jeweils eine Hardware-Variante und/oder eine Software-Variante der Komponente (BG1, ..., BGn) bezeichnet wird.

5. Verfahren nach einem der vorhergehenden Patentansprüche,
**dadurch gekennzeichnet,**
**dass** die Komponente (BG1, ..., BGn) die Steuerungseinrichtung (CPU) umfasst.

6. Komponente (BG1, ..., BGn) zum Betrieb mit einer Steuerungseinrichtung (CPU) in einer industriellen Automatisierungsanordnung (SPS),
wobei die Komponente (BG1, ..., BGn) eine durch eine Konfigurierungs-Einrichtung (PG) abrufbare Identifizierungsinformation aufweist,
**dadurch gekennzeichnet,**
**dass** die Komponente (BG1, ..., BGn) zumindest eine Ersatz-Identifizierungsinformation zur Übermittlung an die Konfigurierungs-Einrichtung (PG) bereit hält, wobei diese Ersatz-Identifizierungsinformation eine andere Komponente (BG1, ..., BGn) bezeichnet, deren zugeordneter Konfigurierungs-Datensatz durch die Steuerungseinrichtung (CPU) für den Betrieb der Komponente (BG1, ..., BGn) verwendbar ist.

7. Komponente (BG1, ..., BGn) nach Patentanspruch 5,
**dadurch gekennzeichnet,**
**dass** die Komponente (BG1, ..., BGn) im Falle einer Mehrzahl bereit gehaltener Ersatz-Identifizierungsinformationen zur wahlweisen Nachbildung einer der mit den bereit gehaltenen Ersatz-Identifizierungsinformationen bezeichneten anderen Komponenten (BG1, ..., BGn) eingerichtet ist.

8. Komponente (BG1, ..., BGn) nach Patentanspruch 5 oder 6, **dadurch gekennzeichnet,**
**dass** die Identifizierungsinformation jeweils eine Hardware-Variante und/oder eine Software-Variante der jeweils bezeichneten Komponente (BG1, ..., BGn) bezeichnet.

9. Komponente (BG1, ..., BGn) nach einem der Patentansprüche 6 bis 8,
**dadurch gekennzeichnet,**
**dass** die Komponente (BG1, ..., BGn) die Steuerungseinrichtung (CPU) umfasst.
